(19) Europäisches Patentamt
European Patent Office
Office européen des brevets

(11) EP 0 585 829 B1

(12) **EUROPÄISCHE PATENTSCHRIFT**

(45) Veröffentlichungstag und Bekanntmachung des Hinweises auf die Patenterteilung:
**07.01.1998 Patentblatt 1998/02**

(51) Int Cl.6: **C08G 73/10**

(21) Anmeldenummer: **93113718.6**

(22) Anmeldetag: **27.08.1993**

# (54) Rekristallisierbare Polyimide

Recrystallizable polyimide

Polyimide recristallisable

(84) Benannte Vertragsstaaten:
**BE DE FR GB NL**

(30) Priorität: **02.09.1992 DE 4229180**

(43) Veröffentlichungstag der Anmeldung:
**09.03.1994 Patentblatt 1994/10**

(73) Patentinhaber: **BASF Aktiengesellschaft
67063 Ludwigshafen (DE)**

(72) Erfinder:
- **Elbl-Weiser, Karin, Dr.
D-6905 Schriesheim (DE)**
- **Koch, Juergen, Dr.
D-6708 Neuhofen (DE)**

(56) Entgegenhaltungen:
**EP-A- 0 122 060**
**EP-A- 0 323 912**
**EP-A- 0 392 680**
**EP-A- 0 424 805**
**EP-A- 0 472 402**
**EP-A- 0 474 501**

EP 0 585 829 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die vorliegende Erfindung betrifft Polyimide, die durch Umsetzen

A) einer Dianhydridkomponente aus

$a_1$) 65 bis 98 Mol-% 3,4,3',4'-Biphenyltetracarbonsäuredianhydrid der Struktur

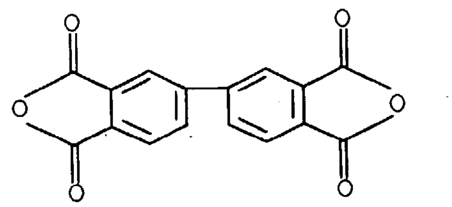

und

$a_2$) 2 bis 35 Mol-% Oxydiphthalsäuredianhydrid der Struktur

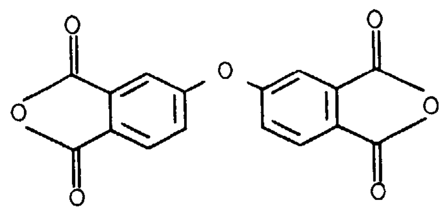

sowie darüber hinaus

$a_3$) 0 bis 30 Mol-% weiteren, von ($a_1$) und ($a_2$) verschiedenen, aromatischen Dianhydriden mit

B) einer Diaminkomponente aus

$b_1$) 65 bis 100 Mol-% Diaminen der allgemeinen Formel

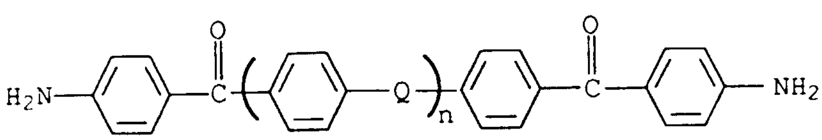 (I)

wobei

n 1 oder 2 sein kann und

Q -O-, -S-, $-SO_2-$, $-C(CH_3)_2-$, $-C(CF_3)_2-$ oder $-CH_2-$ bedeutet

sowie darüber hinaus

$b_2$) 0 bis 35 Mol-% weiterer, von ($b_1$) verschiedener aromatischer Diamine

erhältlich sind.

Ferner betrifft die vorliegende Erfindung die Verwendung dieser Polyimide zur Herstellung von Formkörpern, Fasern oder Folien sowie Klebstoffen.

Da bekannt ist, daß teilkristalline Polymere im allgemeinen bessere mechanische Eigenschaften als ihre amorphen Analoga aufweisen und dabei in der Regel eine höhere Stabilität gegen schädigende Umgebungseinflüsse besitzen, hat man teilkristalline Polyimide hergestellt. Schmilzt man jedoch diese Polyimide auf, bleiben die meisten der bekannten teilkristallinen Polyimide auch nach dem Abkühlen amorph. Die Teilkristallinität läßt sich auch nicht mehr durch thermische Behandlung regenerieren [Hergenrother: Polymer J. 19, 73-83 (1987)].

Einzelne rekristallisierbare Polyimide sind aus der EP-B1-122 060 bekannt (s. Seite 14, Beispiel 8c und 8h). Weitere rekristallisierbare Polyimide sind in der nicht vorveröffentlichten deutschen Patentanmeldung P 41 16 366.4 beschrieben.

Aus der EP-B1-71749 sowie der US-A-5 072 046 sind Polyimide auf der Basis von Bisaminophenylketonen bekannt.

Aufgabe der vorliegenden Erfindung war es, Polyimide auf der Basis von Bisaminophenylketonen zur Verfügung zu stellen, die rekristallisierbar sind und vorzugsweise eine Schmelztemperatur von unter 400°C aufweisen.

Diese Aufgabe wird von den eingangs beschriebenen Polyimiden erfüllt.

Die erfindungsgemäßen Polyimide können durch Umsetzen einer Dianhydridkomponente (A) mit einer Diaminkomponente (B) hergestellt werden.

Die Dianhydridkomponente ist eine Mischung aus 3,4,3',4'-Biphenyltetracarbonsäuredianhydrid ($a_1$) der Struktur

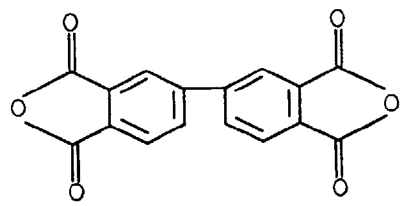

und 4,4'-Oxydiphthalsäureanhydrid ($a_2$) der Struktur

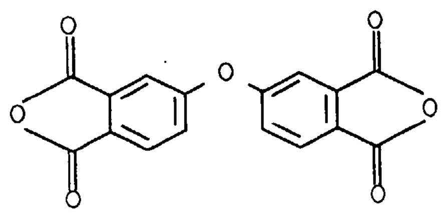

Daneben kann die Dianhydridkomponente noch weitere, von (ai) und ($a_2$) verschiedene aromatische Dianhydride ($a_3$) enthalten. Dabei enthält die Dianhydridkomponente 65 bis 98 Mol-%, bevorzugt 75 bis 98 Mol-%, insbesondere 80 bis 94 Mol-% des Dianhydrides ($a_1$) und 2 bis 35 Mol-%, bevorzugt 2 bis 25 Mol-%, insbesondere 4 bis 18 Mol-% des Dianhydrides ($a_2$).

Der Anteil der Dianhydride ($a_3$) kann bis zu 35 Mol-% betragen. Bevorzugt werden 0 bis 15 Mol-%, insbesondere 2 bis 10 Mol-% dieser Dianhydride verwendet.

Unter den Dianhydriden ($a_3$) kommen diejenigen bevorzugt in Betracht, die die Struktur

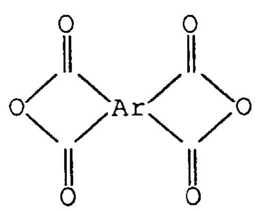

(II)

wobei Ar

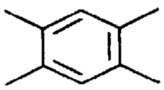, 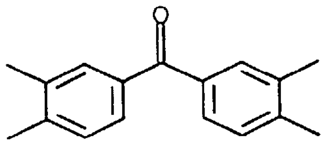, 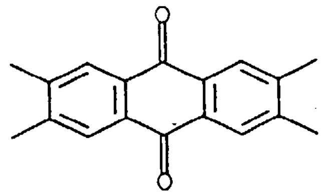,

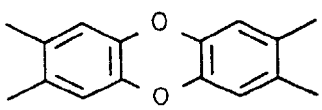, 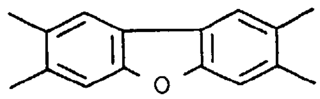,

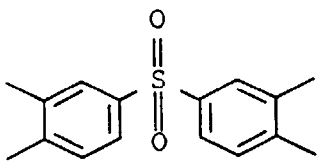, 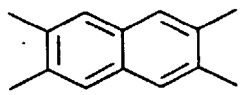, 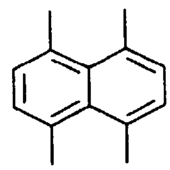

oder

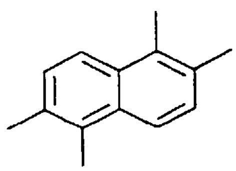

ist, haben. Daneben können beispielsweise auch Verbindungen (II) verwendet werden, in denen Ar

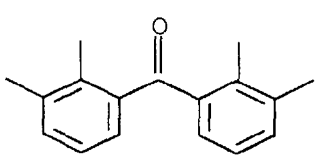 oder 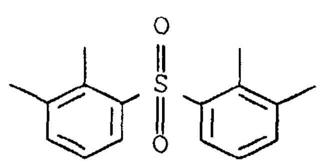

ist.

Ganz besonders bevorzugte Dianhydride ($a_3$) sind

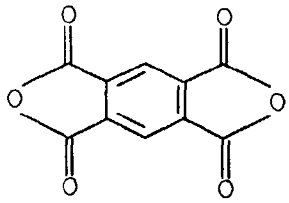

,

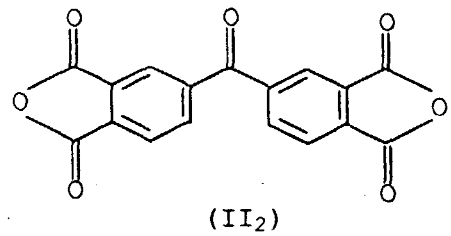

(II1)　　(II2)

oder

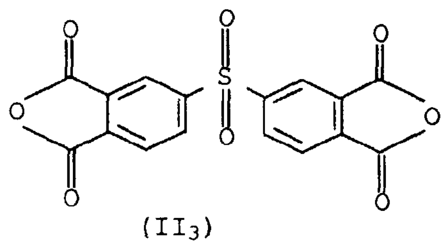

(II3)

Die Diaminkomponente (B) enthält 65 bis 100 Mol-%, bevorzugt 80 bis 100 Mol-%, insbesondere 90 bis 98 Mol-% Diamine ($b_1$). Es können aber auch noch weitere, von ($b_1$) verschiedene, aromatische Diamine ($b_2$) enthalten sein. Deren Anteil an (B) kann 0 bis 35 Mol-% bevorzugt 0 bis 20 Mol-%, insbesondere 2 bis 10 Mol-% betragen.

Als Diamine ($b_1$) werden Bisaminophenylketone der allgemeinen Formel

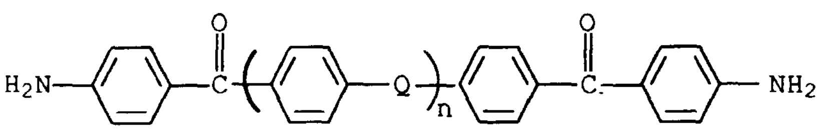

(I)

wobei

n　1 oder 2 sein kann und

Q　-O-, -S-, $-SO_2-$, $-C(CH_3)_2-$, $-C(CF_3)_2-$ oder $-CH_2-$ bedeutet

eingesetzt. Beispiele dieser Diamine sind:

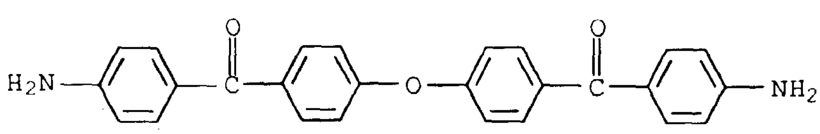

($I_1$)

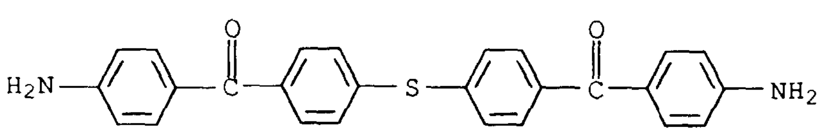

($I_2$)

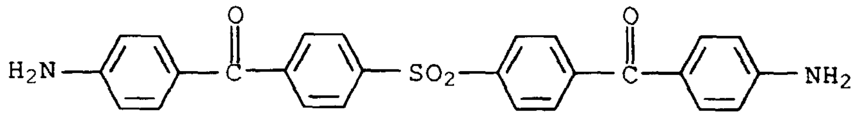

($I_3$)

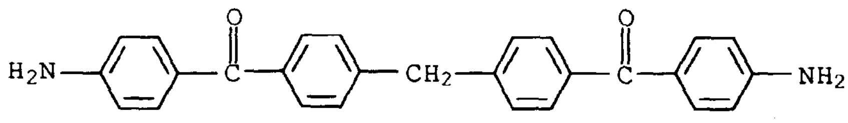

($I_4$)

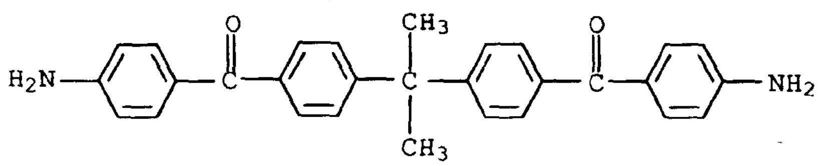

($I_5$)

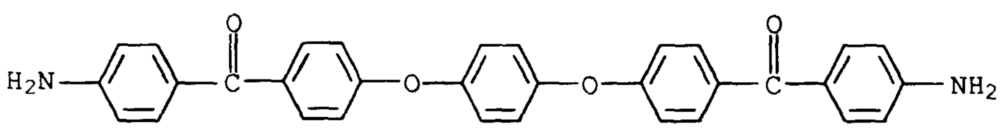

($I_6$)

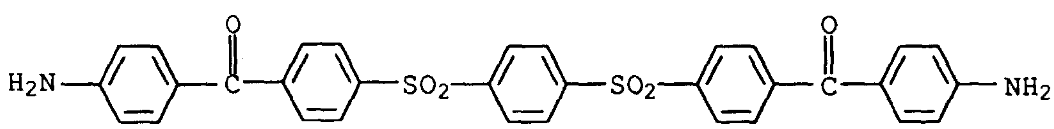

($I_7$)

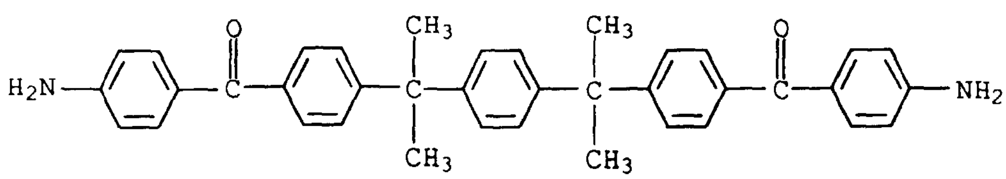

($I_8$)

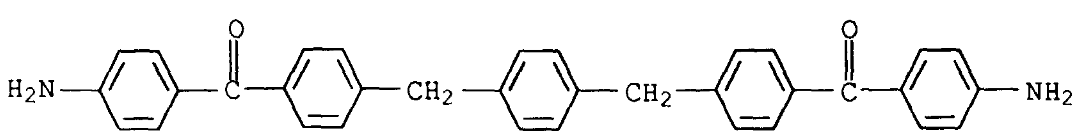

($I_9$)

Darunter sind die Diamine der Strukturen $I_1$, $I_2$ und $I_3$ besonders bevorzugt. Ganz besonders bevorzugt werden Diamine der Struktur ($I_1$) verwendet.

Im allgemeinen haben die Diamine ($b_2$) die allgemeine Formel

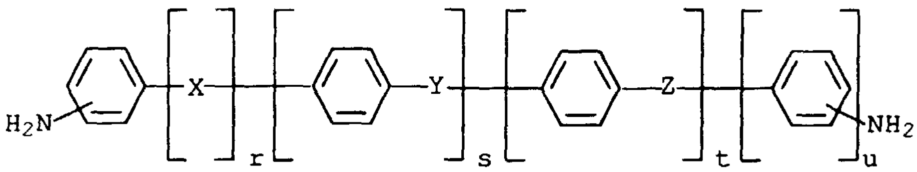

(III)

wobei

r, s, t und u unabhängig voneinander O oder 1 bedeuten und

X, Y und Z unabhängig voneinander -O-, -CO-, -S-, -$SO_2$ oder eine direkte Bindung bedeuten.

Beispiele derartiger Diamine sind

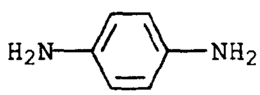

($III_1$)

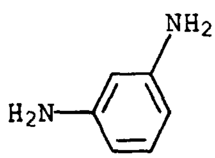

($III_2$)

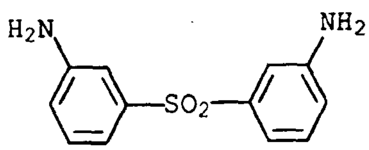

($III_3$)

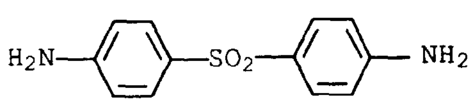

($III_4$)

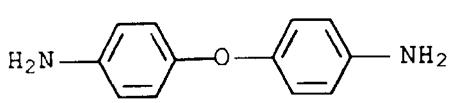

($III_5$)

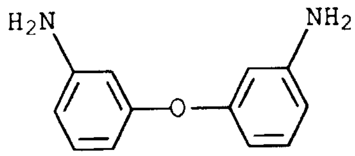

(III6)

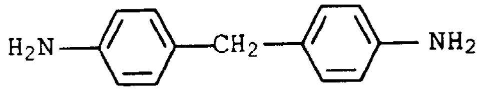

(III7)

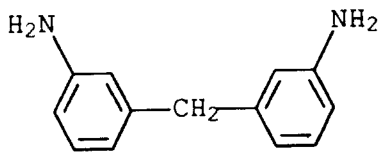

(III8)

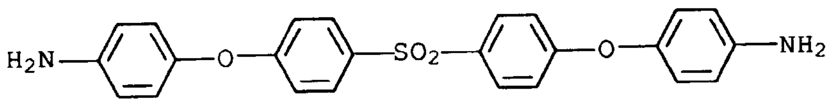

(III9)

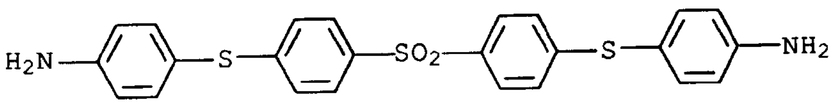

(III10)

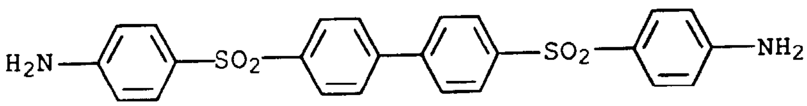

(III11)

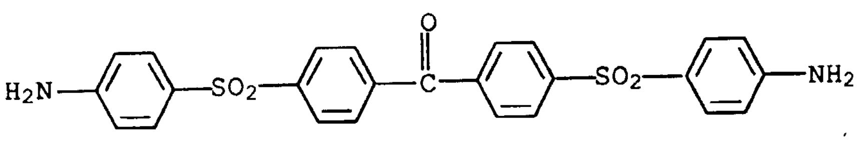

(III12)

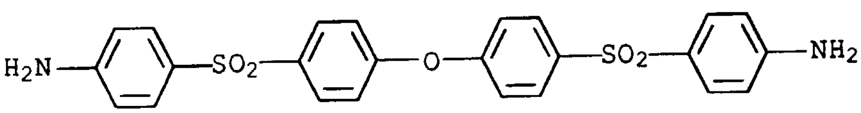

(III13)

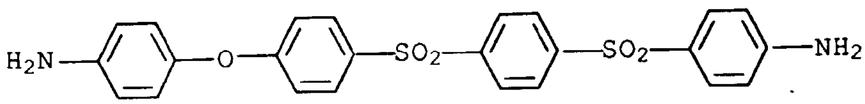

(III14)

Bevorzugt werden ($III_1$) bis ($III_8$) verwendet.

Die erfindungsgemäßen Polyimide weisen in der Regel reduzierte Viskositäten im Bereich von 20 bis 200 ml/g auf. vorzugsweise liegen die reduzierten Viskositäten im Bereich von 30 bis 130 ml/g. Dabei werden die reduzierten Viskositäten in konzentrierter Schwefelsäure bei einer Konzentration von 0,5 g/100 ml gemessen. Die Schmelzpunkte und Glasübergangstemperaturen der erfindungsgemäßen Polyimide werden mittels DSC bestimmt. Dazu werden die Polyimide mit einer Heizrate von 20°C/min aufgeheizt. Im allgemeinen liegen die Schmelzpunkte im Bereich von 250 bis 400, inbesondere von 300 bis 400°C. Nach dem zweiten oder weiteren Aufheizen liegen sie in der Regel im Bereich von 240 bis 400, insbesondere von 250 bis 390 °C. Die Glasübergangstemperaturen liegen im allgemeinen im Bereich von 180 bis 250, insbesondere von 200 bis 250°C.

Um gute mechanische Eigenschaften zu erzielen, ist es vorteilhaft, wenn der Zahlenmittelwert des Molekulargewichtes $\overline{M}_n$ der erfindungsgemäßen Polyimide mindestens 10 000 g/mol beträgt. Für viele Anwendungszwecke kann $\overline{M}_n$ im Bereich von 15 000 bis 20 000 g/mol liegen; Molekulargewichte $\overline{M}_n$ von mehr als 30 000 g/mol sind meist nicht erforderlich.

Die Herstellung der Polyimide erfolgt erfindungsgemäß durch Umsetzen der Dianhydridkomponente (A) mit der Diaminkomponente (B). Im Verlauf dieser Reaktion werden vermutlich zunächst die Anhydridringe in die entsprechenden Amid-Carbonsäurefunktionen umgewandelt. Dieses Polyamidcarbonsäure-Präpolymere cyclisiert unter Abspaltung von Wasser anschließend zum entsprechenden Polyimid wie im folgenden schematisch dargestellt ist:

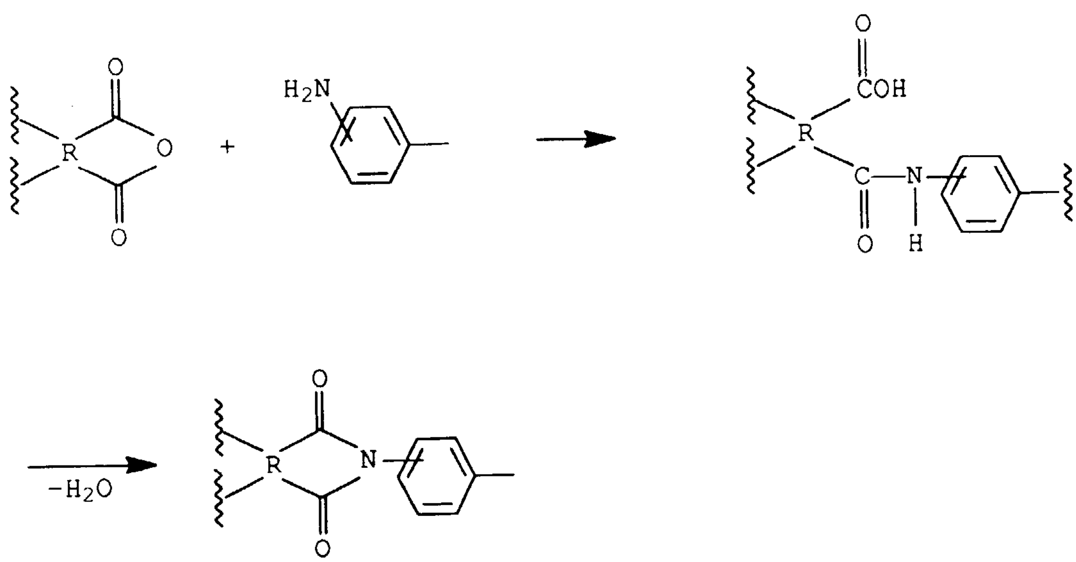


Zu Beginn oder während der Reaktion, aber auch nachdem der Molekulargewichtsaufbau erfolgt ist, können monofunktionelle Verbindungen zugegeben werden. Hierdurch lassen sich die Molekulargewichte der Polyimide und die Fließeigenschaften sowie die Stabilität ihrer Schmelzen steuern. Geeignete monofunktionelle Verbindungen sind aromatische Anhydride wie Phthalsäureanhydrid und aromatische Amine, z.B. Anilin.

Die Wasserabspaltung wird in einem Lösungsmittel oder einem Lösungsmittelgemisch vorgenommen. Als Lösungsmittel werden bevorzugt dipolar aprotische Lösungsmittel wie N,N-Dimethylformamid, N,N-Dimethylacetamid, N-Methylpyrrolidon, Dimethylsulfoxid, Diphenylsulfon, Sulfolan, γ-Butyrolacton oder N-Methylcaprolactam verwendet. Besonders bevorzugt wird N-Methylpyrrolidon. Oft ist es zweckmäßig ein oder mehrere Cosolventien mitzuverwenden, die mit Wasser ein azeotropes Gemisch bilden, das es erlaubt, das gebildete Reaktionswasser durch azeotrope Destillation zu entfernen. Eines der geeigneten Cosolventien ist beispielsweise Toluol.

Je nach Reaktivität der Diaminkomponente erfolgt die Wasserabspaltung bei erhöhter Temperatur, bevorzugt unter Mitverwendung eines Cosolvens, oder bei niedrigerer Temperatur in Gegenwart eines Katalysators. Ein Maß für die Reaktivität der Diaminkomponente ist deren Basizitätskonstante, ausgedrückt als pKa-Wert (siehe z.B. Bessonov et

al.: "Polyimides - Thermally Stable Polymers", Consultants Bureau, New York 1987, 20 ff). Im allgemeinen wird für Diamine mit einem pKa-Wert größer 4,5 das katalytische, sonst das rein thermische Verfahren bevorzugt.

Die Wasserabspaltung in Abwesenheit eines Katalysators beginnt meist bei 20°C und verläuft im allgemeinen erst ab 80°C mit merklicher Geschwindigkeit. Temperaturen von mehr als 190°C sind in der Regel dann nicht erforderlich, wenn ein Cosolvens mitverwendet wird. In Gegenwart eines Katalysators cyclisiert das Polyamidcarbonsäure-Präpolymere in der Regel bereits unterhalb 100°C, meist sogar schon bei Temperaturen von weniger als 70°C, mit erhöhter Geschwindigkeit.

Als Katalysatoren werden im allgemeinen Mischungen aus tertiären Aminen und Anhydriden niederer Fettsäuren eingesetzt. Als tertiäre Amine kommen aliphatische Amine wie Tributylamin oder Triisopropylamin oder aromatische Amine wie Pyridin, Lutidin, Chinolin oder Isochinolin in Betracht. Beispiele geeigneter Anhydride sind Essigsäureanhydrid, Hexansäureanhydrid, Caprylsäureanhydrid und Laurylsäureanhydrid. Bevorzugt wird Essigsäureanhydrid eingesetzt.

Die erfindungsgemäßen Polyimide zeichnen sich durch ihre gute Löslichkeit in den genannten Lösungsmitteln aus. Im allgemeinen sind sie auch in Konzentrationen von über 10 Gew.-% vollständig in diesen löslich. In der Regel weisen sie reduzierte Viskositäten ab 20, bevorzugt ab 30 ml/g, gemessen in N-Methylpyrrolidon bei einer Konzentration von 0,5 g/100 ml, auf. Meistens weisen die erfindungsgemäßen Polyimide keine reduzierten Viskositäten oberhalb eines Wertes von 200 ml/g, gemessen in N-Methylpyrrolidon bei einer Konzentration von 0,5 g/100 ml auf. Bevorzugt werden Polyimide mit reduzierten Viskositäten von 130 ml/g oder weniger, gemessen an N-Methylpyrrolidon bei einer Konzentration von 0,5 g/100 ml.

Den erfindungsgemäßen Polyimiden können übliche Zusatzstoffe in bis zu 50 Gew.-%, vorzugsweise 5 bis 30 Gew.-%, bezogen auf die Mischung zugegeben werden. Zu den Zusatzstoffen zählen faser- oder teilchenförmige Füll- oder Verstärkungsmittel wie Kohlenstoff- oder Glasfasern, Glaskugeln und Calciumsilikate wie Wollastonit und Kaolin.

Weitere Additive, die die erfindungsgemäßen Polyimide enthalten können sind beispielsweise Stabilisatoren, Fließverbesserer und Farbstoffe. Diese können im allgemeinen in Mengen von 0,01 bis 10 Gew.-% in den erfindungsgemäßen Polyimidsulfonen enthalten sein.

Die erfindungsgemäßen Polyimide können nach an sich bekannten Verfahren thermoplastisch zu Formkörpern, Fasern oder flächigen Gebilden verarbeitet werden. Es wird bevorzugt, die Polyimide aus der Schmelze heraus zu verarbeiten. Es ist aber zum Beispiel auch möglich, die Polyimide vor dem Verarbeiten in einem Dispergiermittel zu dispergieren. Die Verarbeitung kann beispielsweise durch Verpressen, Extrudieren, Spritzgießen oder Tiefziehen erfolgen. Man kann aber auch eine Schmelze oder Dispersion auf Verstärkungsfasern oder -matten aufbringen und das erhaltene Halbzeug, gewünschtenfalls nach Entfernen des Dispergiermittels, verformen.

Die erfindungsgemäßen Polyimide können als strukturelle Klebstoffe eingesetzt werden, wobei die Kristallinität der Polyimide den Verklebungen eine hohe Festigkeit sowie eine hohe Lösungsmittelbeständigkeit verleiht.

Schließlich können die erfindungsgemäßen Polyimide auch zur Herstellung von thermoplastischen Formmassen durch Mischen mit anderen bekannten hochtemperaturbeständigen Polymeren, wie z.B. Polyarylethern, verwendet werden. Um die, aus ihrer Teilkristallinität resultierenden, beschriebenen besonderen Vorteile der erfindungsgemäßen Polyimide nutzbar zu machen, enthalten solche Mischungen die erfindungsgemäßen Polyimide bevorzugt in einem Mischungsverhältnis, das den Erhalt des teilkristallinen Charakters in den Polymermischungen erlaubt.

## Beispiele

Die reduzierten Viskositäten $\eta_{red}$, Schmelzpunkte $T_m$ und Glasübergangstemperaturen $T_g$ wurden wie oben beschrieben bestimmt.

### Beispiele 1 bis 4

Allgemeine Arbeitsvorschrift

Die Reaktion wurde unter Stickstoff als Schutzgas ausgeführt. Man legte N-Methylpyrrolidon (NMP) vor und gab 4,4'-Bis(4-aminobenzoyl)diphenylether ($I_1$) (BPDE) zu. Nachdem sich das Diamin (BPDE) vollständig gelöst hatte, wurden in die Mischung unter Eiswasserkühlung 3,4,3',4'-Biphenyltetracarbonsäuredianhydrid ($a_1$) (BPDA) und 4,4'-Oxydiphthalsäureanhydrid ($a_2$) (OPDA) und Phthalsäureanhydrid (PA) und 4-Dimethylaminopyridin (DMAPy) zudosiert.

Danach wurde auf Raumtemperatur aufgewärmt und vier Stunden bei dieser Temperatur gerührt. Anschließend wurde die Reaktionsmischung mit weiterem NMP verdünnt und mit Mesitylen versetzt.

Unter Rühren wurde bis zum Rückfluß erhitzt und das entstehende Reaktionswasser abdestilliert. Anschließend wurde das Mesitylen abdestilliert.

Nach dem Abkühlen wurde die Reaktionsmischung in Methanol gegossen, der Feststoff abgesaugt und mit Methanol gewaschen. Das Produkt wurde bei 150°C im Vakuum getrocknet. Die jeweiligen Mengenangaben sind der Tabelle zu entnehmen.

Tabelle

| Komponenten | Beispiel 1 | 2 | 3 | 4 |
|---|---|---|---|---|
| BPDE (Diamin) [g (mmol)] | 10,62 (26,0) | 10,62 (26,0) | 10,62 (26,0) | 20,83 (51,0) |
| BPDA (1. Dianhydrid) [g (mmol), %] | 7,21 (24,5), 98 | 6,99 (23,75) 95 | 6,84, (23,5) 93 | 11,77 (40) 80 |
| ODPA (2. Dianhydrid) [g (mmol), %] | 0,16 (0,50), 2 | 0,39 (1,25) 5 | 0,54 (1,75) 7 | 3,10 (10) 20 |
| PA [g (mmol)] | 0,30 (2,0) | 0,30 (2,0) | 0,30 (2,0) | 0,30 (2,0) |
| DMAPy [g (mmol)] | 0,10 (0,80) | 0,10 (0,80) | 0,10 (0,80) | 0 |
| NMP [ml] | 125 | 125 | 125 | 100 |
| Mesitylen [ml] | 150 | 150 | 150 | 250 |

Forts. Tabelle

| Beispiel | 1 | 2 | 3 | 4 |
|---|---|---|---|---|
| Eigenschaften<br>Ausbeute [g (% d. Th.)] | 13 (38,8) | 14,9 (44,5) | 14,3 (42,7) | 31,2 (93,2) |
| $\eta_{red}$ [ml/g] | 82 | 49 | 46 | 55 |
| $T_{m1}$ [°C] | 343 | 342 | 342 | 338 (352*) |
| $T_{m2}$ [°C] | 380 | 331 | 322 | 289 |
| $T_{g2}$ [°C] | 219 | 213 | 217 | 226 |

$T_{m1}$: Schmelzpunkt, bestimmt durch DSC-Messung aus dem Maximum der Schmelzendotherme beim ersten Aufheizen

$T_{m2}$: Schmelzpunkt, bestimmt durch DSC-Messung aus dem Maximum der Schmelzendotherme beim zweiten Aufheizen

$T_{g2}$: Glasübergang, bestimmt durch DSC-Messung beim zweiten Aufheizen

*Es wurden zwei Maxima beobachtet

Vergleichsbeispiel 1

Die Reaktion wurde unter Stickstoff als Schutzgas ausgeführt. Man legte 100 ml N-Methylpyrrolidon (NMP) vor und gab 20,83 g (51 mmol) 4,4'-Bis(3-aminobenzoyl)diphenylether zu. Nachdem sich das Diamin vollständig gelöst hatte, wurden in die Mischung unter Eiswasserkühlung 11,77 g (40 mmol) 3,4,3',4'-Biphenyltetracarbonsäuredianhydrid ($a_1$) und 0,296 g (2 mmol) Phthalsäureanhydrid zudosiert und wie in Beispiel 1 beschrieben weiter verfahren.

Die Ausbeute an Polymer betrug 32,8 g (98,5 % d. Th.).

Die reduzierte Viskosität wurde zu 76 ml/g bestimmt.

Die DSC-Messung zeigte beim ersten Aufheizen einen Schmelzpunkt bei 276°C. Nach dem zweiten Aufheizen war lediglich ein Glasübergang bei 239°C zu beobachten, d.h. das Polyimid lag amorph vor.

Vergleichsbeispiel 2

Die Reaktion wurde unter Stickstoff als Schutzgas ausgeführt. Man legte 100 ml N-Methylpyrroliden (NMP) vor und gab 20,83 g (51 mmol) 4,4'-Bis(4-aminobenzoyl)diphenylether ($I_1$) zu. Nachdem sich das Diamin vollständig gelöst hatte, wurden in die Mischung unter Eiswasserkühlung 11,77 g (40 mmol) 3,4,3',4'-Benzophenonsäuredianhydrid ($a_2$) und 0,296 g (2 mmol) Phthalsäureanhydrid zudosiert und wie im Beispiel 1 beschrieben weiter verfahren.

Die Ausbeute an Polymer betrug 32,9 g (94,8 % d. Th.). Die reduzierte Viskosität wurde zu 34 ml/g bestimmt.

Die DSC-Messung ergab beim ersten Aufheizvorgang zwei Schmelzpunkte bei 388 und 400°C. Beim zweiten Aufheizen war ein Glasübergang bei 240°C beobachtbar, jedoch kein Schmelzpunkt, d.h. das Polyimid lag amorph vor.

**Patentansprüche**

**1.** Polyimide, erhältlich durch Umsetzen

A) einer Dianhydridkomponente aus

$a_1$) 65 bis 98 Mol-% 3,4,3',4'-Biphenyltetracarbonsäuredianhydrid der Struktur

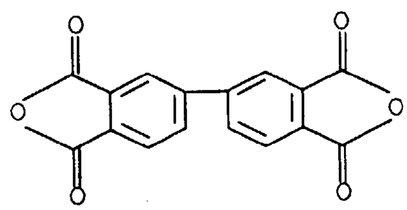

und

$a_2$) 2 bis 35 Mol-% Oxydiphthalsäuredianhydrid der Struktur

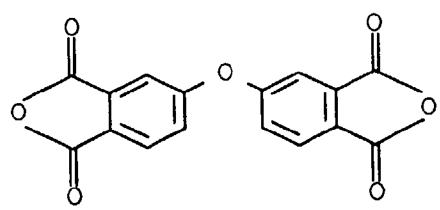

sowie darüber hinaus

$a_3$) 0 bis 30 Mol-%.weiteren, von ($a_1$) und ($a_2$) verschiedenen, aromatischen Dianhydriden mit

B) einer Diaminkomponente aus

$b_1$) 65 bis 100 Mol-% Diaminen der allgemeinen Formel

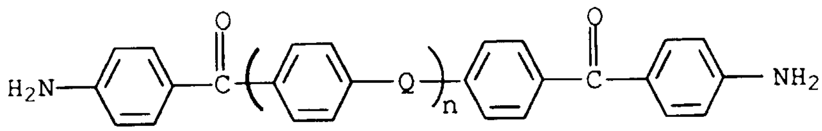

(I)

wobei

n 1 oder 2 sein kann und

Q -O-, -S-, $-SO_2-$, $-C(CH_3)_2-$, $-C(CF_3)_2-$ oder $-CH_2-$bedeutet

sowie darüber hinaus

$b_2$) 0 bis 35 Mol-% weiterer, von ($b_1$) verschiedener aromatischer Diamine.

**2.** Polyimide nach Anspruch 1, in denen die Dianhydride ($a_3$) die allgemeine Formel

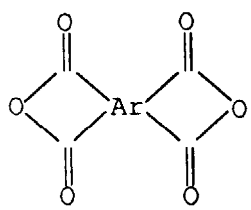

(II)

wobei Ar

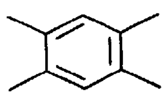 , 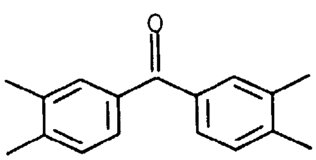 , 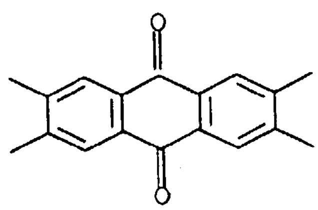 ,

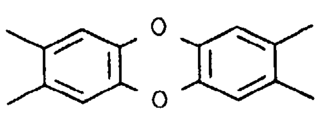 , 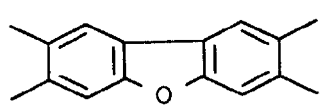 ,

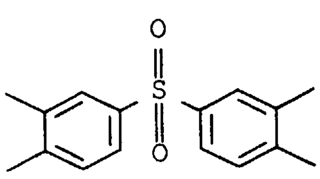 , 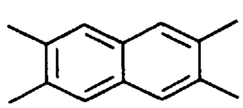 , 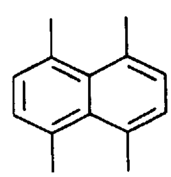 ,

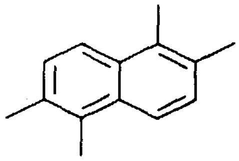,
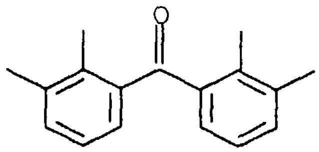
oder
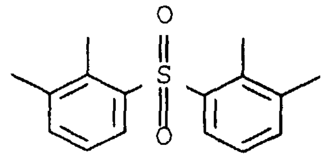

bedeutet.

**3.** Polyimide nach Anspruch 1 oder 2, in denen die Komponente ($a_3$) ein Dianhydrid ist, ausgewählt aus der Gruppe

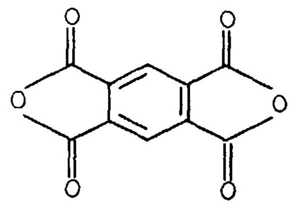
($II_1$)
,
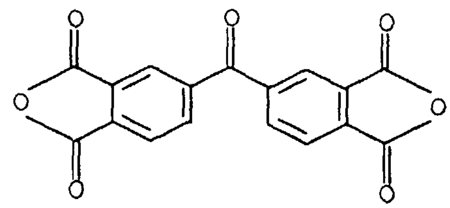
($II_2$)

und

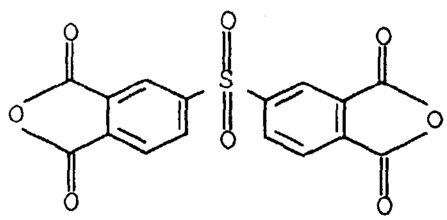.
($II_3$)

**4.** Polyimide nach einem der Ansprüche 1 bis 3, in denen die Diamine ($b_2$) die allgemeine Formel

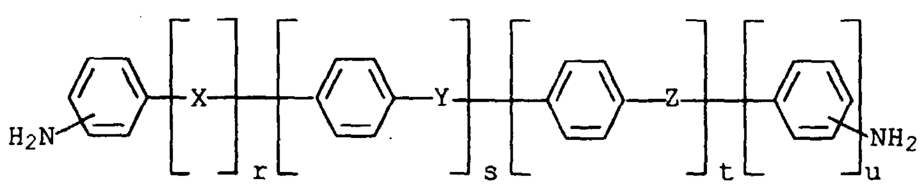
(III)

haben,
wobei

| | |
|---|---|
| r, s, t und u | unabhängig voneinander 0 oder 1 bedeuten und |
| X, Y und Z | unabhängig voneinander -O-, -CO-, -S-, $-SO_2-$, $-CH_2-$, $-C(CH_3)_2-$, $-C(CF_3)_2-$ oder eine direkte Bindung bedeuten. |

**5.** Polyimide nach einem der Ansprüche 1 bis 4, in denen die Komponente ($b_2$) ein Diamin ist, ausgewählt aus der Gruppe

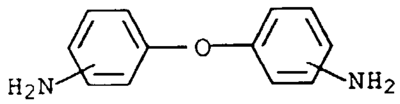 , 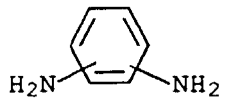 ,

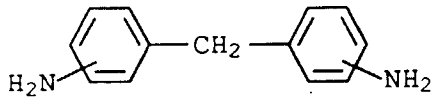 und 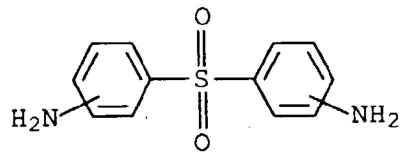

6. Polyimide nach einem der Ansprüche 1 bis 5, erhältlich durch Umsetzen von

A) einer Dianhydridkomponente aus

$a_1$) 75 bis 98 Mol-% 3,4, 3',4'-Biphenyltetracarbonsäuredianhydrid, $a_2$) 2 bis 25 Mol-% 4,4'-Oxydiphthalsäuredianhydrid und

$a_3$) 0 bis 15 Mol-% Dianhydriden der allgemeinen Formel (II) mit

B) einer Diaminkomponente aus

$b_1$) 80 bis 100 Mol-% Diamine der allgemeinen Formel (I) und
$b_2$) 0 bis 20 Mol-% Diamine der allgemeinen Formel (III).

7. Verfahren zur Herstellung der Polyimide gemäß einem der Ansprüche 1 bis 6, dadurch gekennzeichnet, daß man die Dianhydridkomponente (A) mit der Diaminkomponente (B) umsetzt und das Umsetzungsprodukt in einem Lösungsmittel erhitzt.

8. Verwendung der Polyimide gemäß einem der Ansprüche 1 bis 6, zur Herstellung von Formkörpern, Folien oder Fasern.

9. Verwendung der Polyimide nach einem der Ansprüche 1 bis 6, zur Herstellung von Klebstoffen.

10. Formkörper, Folien oder Fasern hergestellt unter Verwendung der Polyimide gemäß einem der Ansprüche 1 bis 6.

**Claims**

1. A polyimide that is obtainable by reacting

A) a dianhydride component comprising

$a_1$) 65 to 98 mol% of 3,4,3',4'-biphenyltetracarboxylic dianhydride of the structure

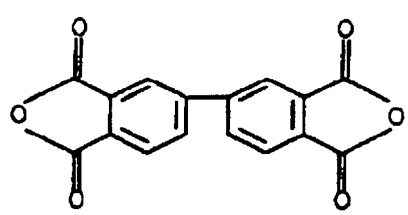

and

$a_2$) 2 to 35 mol% of oxidiphthalic dianhydride of the structure

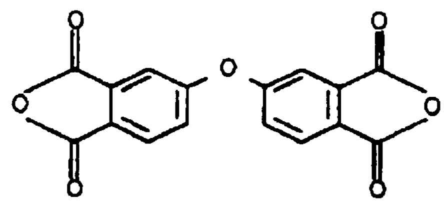

and in addition

$a_3$) 0 to 30 mol% of further aromatic dianhydrides different from ($a_1$) and ($a_2$), with

B) a diamine component comprising

$b_1$) 65 to 100 mol% of diamines of the formula

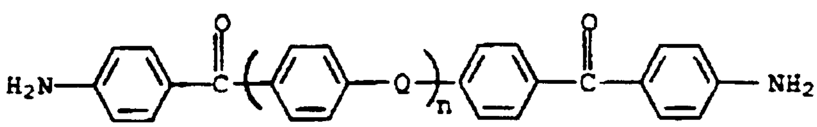

(I)

where

n may be 1 or 2 and

Q is -O-, -S-, $-SO_2-$, $-C(CH_3)_2-$, $-C(CF_3)_2-$or $-CH_2-$and in addition

$b_2$) 0 to 35 mol% of further aromatic diamines different from ($b_1$).

**2.** A polyimide as claimed in claim 1, in which the dianhydrides ($a_3$) have the formula

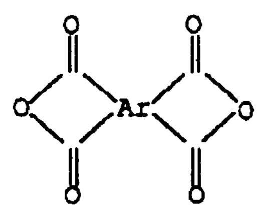

(II)

where Ar is

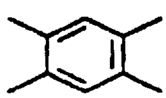

,

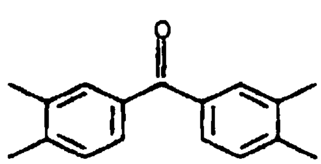

,

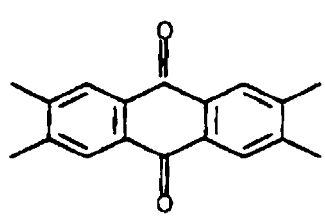

,

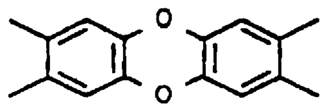 , 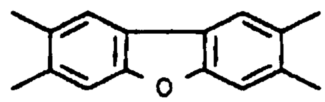 ,

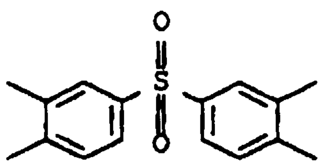 , 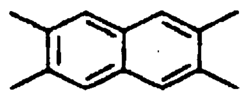 , 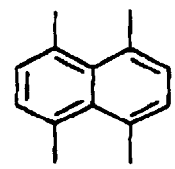 ,

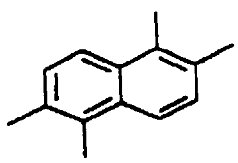 , 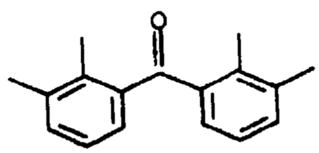 or 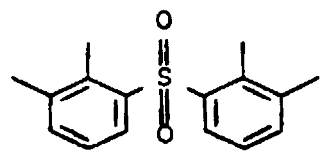 .

**3.** A polyimide as claimed in claim 1 or 2, in which the component ($a_3$) is a dianhydride selected from the group

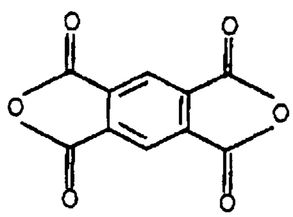

($II_1$)

,

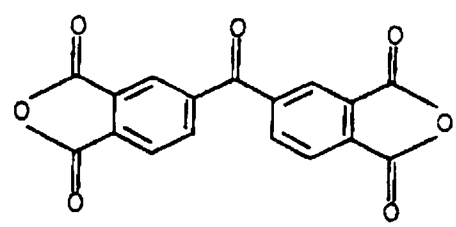

($II_2$)

and

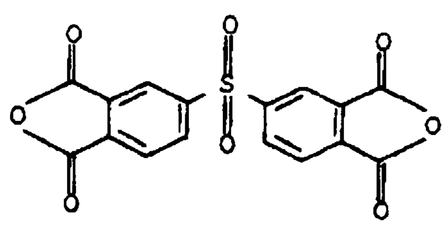 .

($II_3$)

**4.** A polyimide as claimed in any of claims 1 to 3, in which the diamines ($b_2$) have the formula

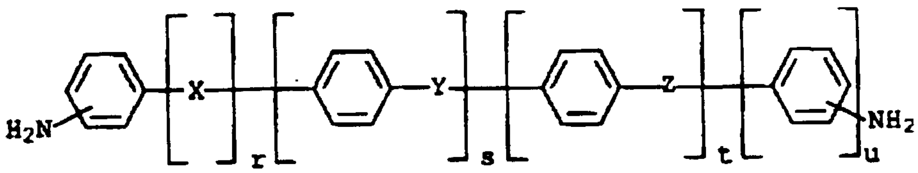 (III)

where

r, s, t and u are, independently of one another, 0 or 1, and
X, Y and Z are, independently of one another, -O-, -CO-, -S-, $-SO_2-$, $-CH_2-$, $-C(CH_3)_2-$, $-C(CF_3)_2-$ or a direct bond.

**5.** A polyimide as claimed in any of claims 1 to 4, in which the component ($b_2$) is a diamine selected from the group

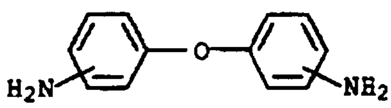, 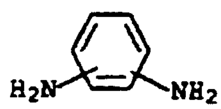,

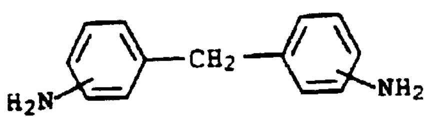 and 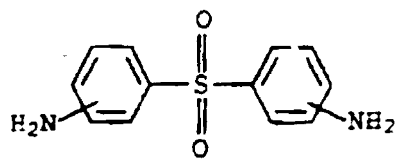

**6.** A polyimide as claimed in any of claims 1 to 5, obtainable by reacting

A) a dianhydride component comprising

$a_1$) 75 to 98 mol% of 3,4,3',4'-biphenyltetracarboxylic dianhydride,
$a_2$) 2 to 25 mol% of 4,4'-oxidiphthalic dianhydride and
$a_3$) 0 to 15 mol% of dianhydrides of the formula (II) with

B) a diamine component comprising

$b_1$) 80 to 100 mol% of diamines of the formula (I) and
$b_2$) 0 to 20 mol% of diamines of the formula (III).

**7.** A process for preparing the polyimides as claimed in any of claims 1 to 6, wherein the dianhydride component (A) is reacted with the diamine component (B) and the reaction product is heated in a solvent.

**8.** The use of a polyimide as claimed in any of claims 1 to 6 for producing moldings, films or fibers.

**9.** The use of a polyimide as claimed in any of claims 1 to 6 for producing adhesives.

**10.** Moldings, films or fibers produced using a polyimide as claimed in any of claims 1 to 6.

## Revendications

**1.** Polyimides, pouvant être obtenus par mise en réaction

A) d'un composant dianhydride constitué de

$a_1$) 65 à 98 % en moles de dianhydride 3,4,3',4'-biphényltétracarboxylique de structure

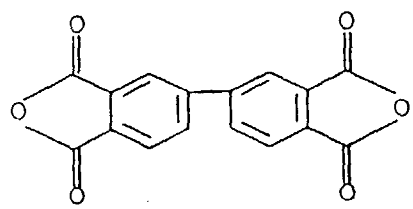

et
$a_2$) 2 à 35 % en moles de dianhydride oxydiphtalique de structure

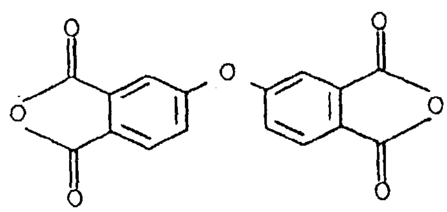

ainsi qu'en outre de
$a_3$) 0 à 30 % en moles d'autres dianhydrides aromatiques, différents de ($a_1$) et ($a_2$), avec

B) un composant diamine constitué de

$b_1$) 65 à 100 % en moles de diamines de formule générale

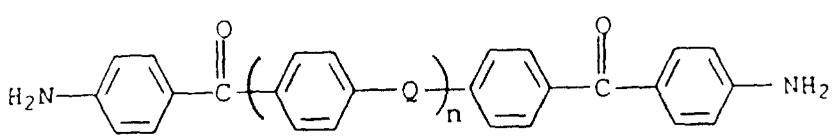

(I)

dans laquelle

n peut être 1 ou 2, et
Q représente -O-, -S-, $-SO_2-$, $-C(CH_3)_2-$, $-C(CF_3)_2-$ ou $-CH_2-$,

ainsi qu'en outre de
$b_2$) 0 à 35 % en moles d'autres diamines aromatiques différentes de ($b_1$).

**2.** Polyimides selon la revendication 1, dans lesquels les dianhydrides ($a_3$) correspondent à la formule générale

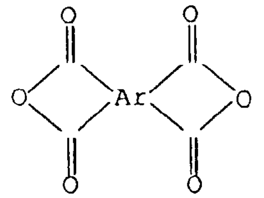

(II)

dans laquelle Ar représente

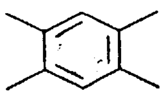 , 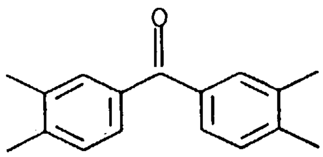 , 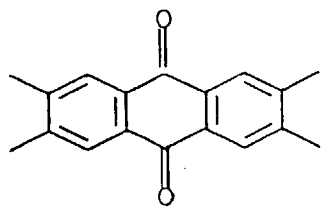 ,

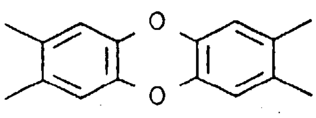 , 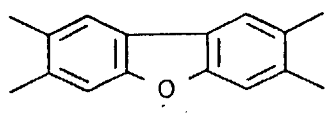 ,

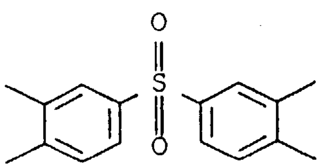 , 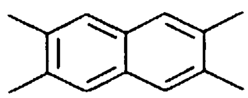 , 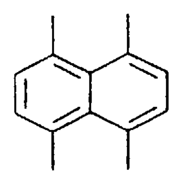 ,

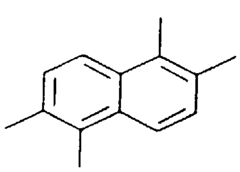 , 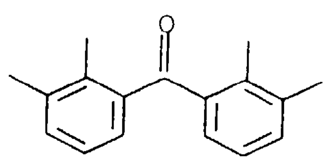 ou 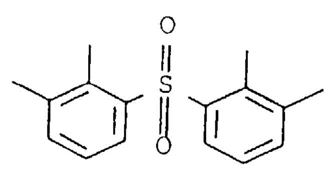

**3.** Polyimides selon la revendication 1 ou 2, dans lesquels le composant ($a_3$) est un dianhydride choisi parmi

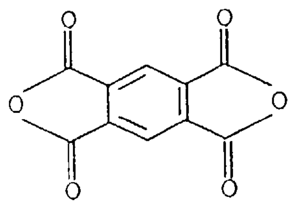

$(II_1)$

,

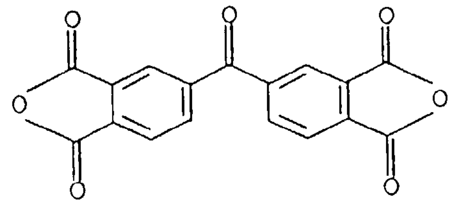

$(II_2)$

et

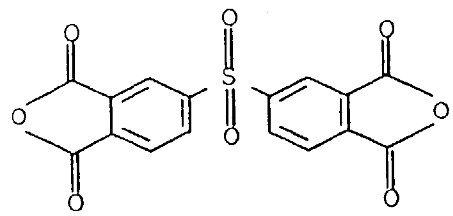

.

$(II_3)$

**4.** Polyimides selon l'une des revendications 1 à 3, dans lesquels les diamines ($b_2$) correspondent à la formule générale

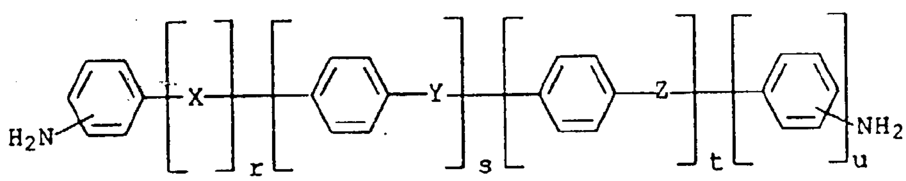

(III)

dans laquelle

| | |
|---|---|
| r, s, t et u | représentent, indépendamment les uns des autres, 0 ou 1, et |
| X, Y et Z | représentent, indépendamment les uns des autres, -O-, -CO-, -S-, $-SO_2-$, $-CH_2-$, $-C(CH_3)_2-$, $-C(CF_3)_2-$ ou une liaison directe. |

**5.** Polyimides selon l'une des revendications 1 à 4, dans lesquels le composant ($b_2$) est une diamine choisie parmi

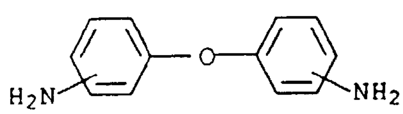

,

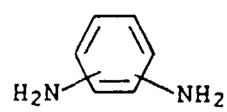

,

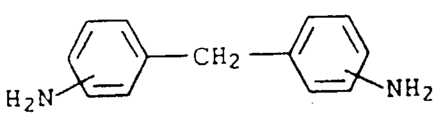

et

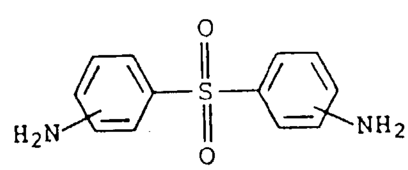

**6.** Polyimides selon l'une des revendications 1 à 5, pouvant être obtenus par mise en réaction

A) d'un composant dianhydride constitué de

$a_1$) 75 à 98 % en moles de dianhydride 3,4,3',4'-biphényltétracarboxylique,
$a_2$) 2 à 25 % en moles de dianhydride oxydiphtalique et
$a_3$) 0 à 15 % en moles de dianhydrides de formule générale (II)
avec

B) un composant diamine constitué de

$b_1$) 80 à 100 % en moles de diamines de formule générale (I) et
$b_2$) 0 à 20 % en moles de diamines de formule générale (III).

**7.** Procédé pour la préparation des polyimides selon l'une des revendications 1 à 6, caractérisé en ce que l'on fait réagir le composant dianhydride (A) avec le composant diamine (B) et on chauffe le produit de réaction dans un solvant.

**8.** Utilisation des polyimides selon l'une des revendications 1 à 6, pour la production de corps moulés, de feuilles ou de fibres.

**9.** Utilisation des polyimides selon l'une des revendications 1 à 6, pour la production d'adhésifs.

**10.** Corps moulés, feuilles ou fibres, produits avec utilisation des polyimides selon l'une des revendications 1 à 6.